# EUROPEAN PATENT SPECIFICATION

(11) **EP 2 813 370 B1**
(45) Date of publication and mention of the grant of the patent: **02.03.2016**
(21) Application number: 14172206.6
(22) Date of filing: 12.06.2014
(51) Int. Cl.: B41M 3/06, B05D 5/06, B41M 7/00, B29C 59/04, B44C 5/04, B05D 5/02, B29C 35/08, B05D 7/00

(54) **Printing method**
Druckverfahren
Procédé d'impression

(30) Priority: 14.06.2013 IT BO20130300
(43) Date of publication of application: 17.12.2014
(73) Proprietor: SORBINI S.r.l., 61122 Pesaro (IT)
(72) Inventor: Sorbini, Roberto, 61122 PESARO (IT); Filippini, Fabrizio, 61122 PESARO (IT)
(74) Representative: Porsia, Attilio

(56) References cited:
- WO-A1-90/15673
- WO-A2-02/068189
- WO-A2-2004/065025
- "A method and an apparatus for decorating a panel", IP.COM JOURNAL, IP.COM INC., WEST HENRIETTA, NY, US, 24 September 2012 (2012-09-24), XP013154151, ISSN: 1533-0001

## Description

The invention relates to a method for painting panels, edges or mouldings of natural or synthetic materials, for instance wood, stone, ceramics, fibre-cement or plastics. In particular, the invention relates to the possibility of embossing, i.e. conferring a three-dimensional (3D) texture, to the painted object through the painting process.

A method for embossing a painted object is already known, for instance from WO9015673 General Electric and WO02068189 Canti.

In particular, WO9015673 first teaches embossing thermoplastic materials through the use of a continuous impressor belt, while WO02068189 teaches the same method using a disposable matrix web. The impressor belt can have a flexibility such as to follow non planar surfaces, allowing to get this same effect, through an application like Canti's WO2004065025, also on the sides and possible depressions present in a worked panel.

In order to realize a believable three-dimensional texture, simulating e.g. the vein of a natural wood, the three-dimensional texture must be realistic and must imitate the aspect of real wood in the coloration of both smooth area and porous area, which is not possible with the above-quoted known methods, which entail the application of a layer of transparent or monochromatic paint.

The main advantage of the present invention lays in the possibility of transforming objects made of cheap material like chipboard, MDF, plywood, fibrecement, plastics into objects having the appearance of more precious and costly materials like natural wood or natural stone, without using, as usually done and as taught by WO9015673 General Electric and WO02068189 Canti, sheets of preprinted plastic materials or decorated papers.

The document "A method and an apparatus for decorating a panel" published on September 24, 2012 of Prior Art Database describes a method and an apparatus for decorating a panel in two subsequent steps. The two step must be performed according to a predetermined positional relationship, and during and between the first and the second step the panel is held in a substantially fixed position with respect to the system transport.

The present invention relates to a method comprising the application in consecutive steps of different paint layers, each having different features.

The basic method (Method 1) object of the present invention comprises the following steps:
a. Application of a three-dimensional texture through a photo-polymerizable paint;
b. Digital or contact print of the desired texture;
c. Application of a transparent top coat.

Optionally, preferred embodiments are described, wherein to the basic method further steps are added.

In a first preferred embodiment (Method 1), the embossing is obtained through the use of a transparent or light (white, cream) photo-polymerizable paint.

In a second preferred embodiment (Method 2), between basic method step a. and b. a further step is added, consisting of applying, uniforming and sanding a stain which is aimed to enhance the engraving in the texture.

In a third preferred embodiment, upstream step a. a light colour base coat is applied, while between steps b. and c. of the basic method a further step is added, consisting of applying, uniforming and sanding a stain which is aimed to enhance the engraving in the texture.

In a fourth preferred embodiment (Method 4), the method is the same as Method 3, but without the step of applying, uniforming and sanding a stain.

According to another aspect of the invention a method for coating panels, edges and mouldings of natural or synthetic materials, e.g. wood, stone, ceramics, fibre-cement or plastics with a coloured tridimensional texture, comprising the following steps:
a. Application of a layer of photo-polymerizable transparent or pail paint on the panel to be coated;
b. Impression of a three-dimensional texture by means of a transparent or monochromatic paint by contact with a transparent tape bearing on one side the three-dimensional texture to be impressed;
c. Pre-polymerisation of the paint by UV irradiation through the transparent tape up to jollification before detaching the tape from the coated surface;
d. Colour printing of a vein on the jellified paint
e. Final curing of the applied layers by UV irradiation;
f. Application of a protective transparent finish.

The invention will be now described with reference to the four tables of drawings which illustrates non limiting embodiments, in which:
- Figure 1 is a flow chart describing the simplest version of the method (Method 1);
- Figure 2 is a flow chart describing an alternative version of the method (Method 2), comprising further steps with respect to Method 1;

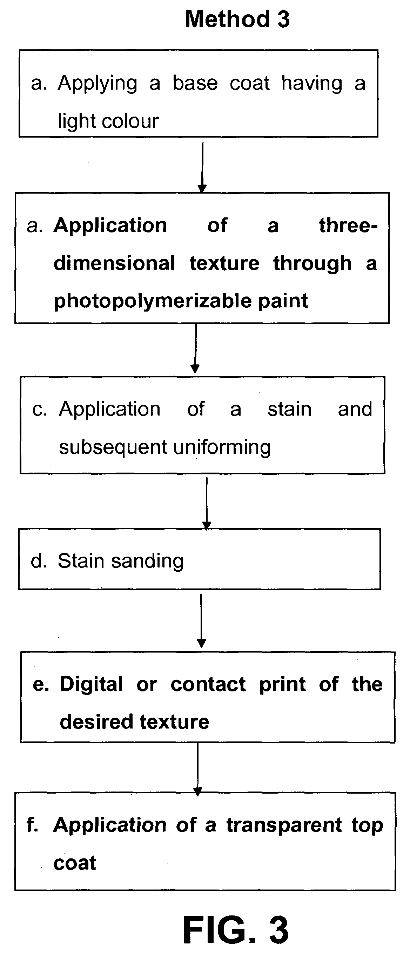

- Figure 3 is a flow chart describing an alternative version of the method (Method 3), comprising further steps with respect to Method 1;

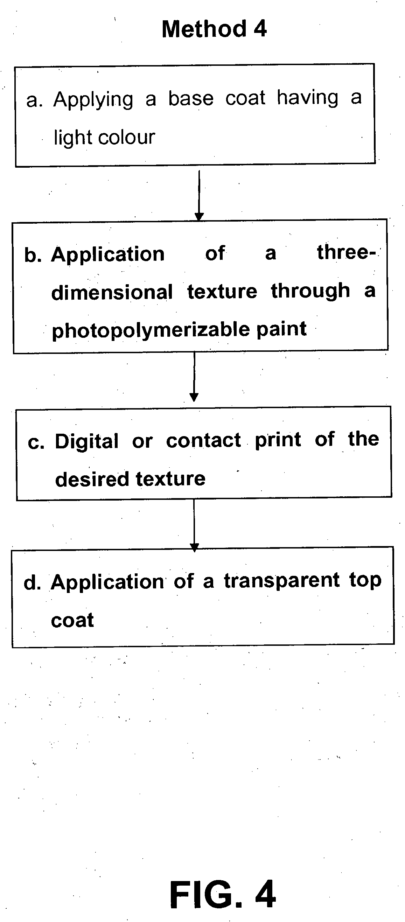

- Figure 4 is a flow chart describing an alternative version of the method (Method 4), comprising further steps with respect to Method 1.

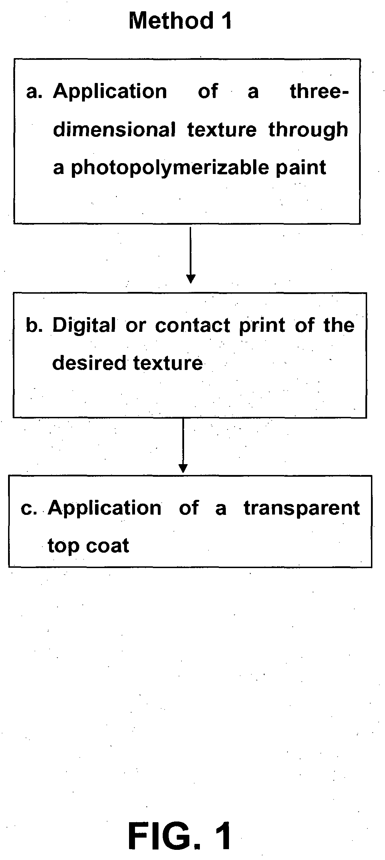

In Figure 1, the flow chart illustrates the main steps of **Method 1:**
a. Application of a three-dimensional texture through a photo-polymerizable paint In this method to the object to be painted is first applied a three-dimensional texture obtained through the application of a layer of photo-polymerizable paint of a light (white, cream) colour or transparent. The light colour has the aim of allowing a printing of good quality, and at the same time of applying a base allowing to cover the basic structure of the material of the object to be painted (e.g. the wood particles of chipboard).
   The paint applied for instance through a roll or sprayed is uniformed by the belt or the web matrix impressing the texture to be transferred on the object, said paint being cured or gelled by the U.V ray lamp that is above the belt/web. The UV radiation emitted by the lamp goes through the clear belt/web, making the photo-polymerizable paint react. The photo-polymerizable paint acquires the desired texture through the transferring of the embossing on the impressor belt/web matrix and the following polymerization before removing the impressor belt/web matrix. The impressor can be a disposable web matrix or a continuous belt.
b. Digital or contact print of the desired texture
   Printing on the texture allows to get a more natural effect, similar, for instance, to that of natural wood. The print can, or not, follow the three-dimensional texture applied with the photo-polymerizable paint, according to the desired result.
   The printing technologies typically used are digital printing or contact printing through engraved rollers. The inks used can be water inks, solvent inks, or U.V. photo-polymerizable inks.
c. Application of a transparent top coat
   Applying a transparent top coat layer allows to uniform the degree of gloss of the painted object and to have an increased protection of the print. Preferably, this layer is applied with rollers or sprayed or with curtain coater. The transparent top coat can be gloss or matt. The transparent top coat can comprise substances capable of conferring abrasion- resistance surface properties, for instance aluminium oxide.

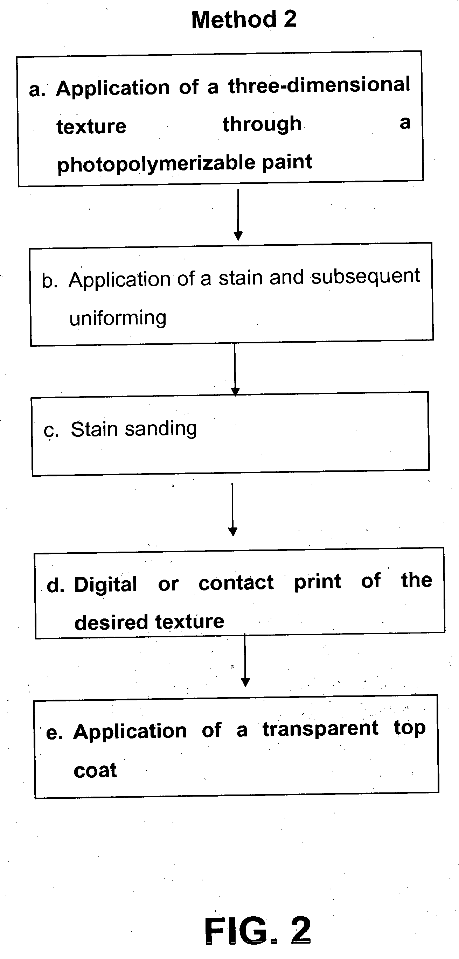

Figure 2 shows a flow chart illustrating Method 2 steps. The fundamental steps of Method 1 are written in bold.

**Method 2** comprises the following steps:
a. Application of a three-dimensional texture through a photo-polymerizable paint
b. Application of a stain and subsequent uniforming
   Applying a stain, generally a contrast colour tending to dark, has the aim of improving the three-dimensional effect of the object, in that the engravings of the texture are highlighted trough the contrast colour. Preferably, the colour is applied with roller or sprayed, and can be uniformed through manual or automated wiping.
c. Stain sanding
   It aims to remove the most of stain, so that colour remains in the depressions of the texture only.
d. Digital or contact print of the desired texture
e. Application of a transparent top coat.

**Method 3** comprises the following steps:
a. Applying a base coat having a light colour
   The light colour base coat has the aim of applying a base allowing a good quality printing, and moreover of covering the basic structure of the material to be painted (e.g. the wood particles of chipboard).
b. Application of a three-dimensional texture through a photo-polymerizable paint
c. Application of a stain and subsequent uniforming
d. Stain sanding
e. Digital or contact print of the desired texture
f. Application of a transparent top coat.

**Method 4** comprises the following steps:
a. Applying a base coat having a light colour
b. Application of a three-dimensional texture through a photo-polymerizable paint
c. Digital or contact print of the desired texture
d. Application of a transparent top coat.

The choice of Method 1, 2, 3 or 4 depends on both the features of the material to be painted, which can be more or less coarse, therefore needing a better covering, and on the desired final effect on the painted material.

The presence of steps of applying, uniforming and sanding of stain in Methods 2 and 3 confers to the final result a more unrefined and vintage aspect, with respect to the result obtainable through Methods 1 and 4.

In Methods 3 and 4, the choice of using an opaque paint before applying the three-dimensional texture aims to get a more uniform background colour. These methods are preferably used when the material to be painted is particularly coarse (chipboard) or when the final colour of the painted object is light (for instance when birch vein has to be simulated) while transparent lacquer is used when the background colour of the raw material is already suitable for the expected final result or has a vein that is to be kept visible after the process.

## Claims

1. A method for coating panels, edges and mouldings of natural or synthetic materials, e.g. wood, stone, ceramics, fibre-cement or plastics, comprising the following steps:
a. Application of a three-dimensional texture through a photo-polymerizable paint; wherein
the layer of photo-polymerizable paint is of a light colour or transparent;
the layer of photo-polymerizable paint is made uniform by a belt or web matrix to impress the texture transferred on the object;
the layer of photo-polymerizable paint is cured or gelled by a UV lamp placed above said belt/web, said UV radiation going through the clear belt/web;
the layer of photo-polymerizable paint acquires the desired texture through transfer of the embossing on the impressor belt/web matrix and the following polymerization before removing the impressor belt/web matrix;
the impressor can only be a disposable web matrix or a continuous belt;
b. Digital or contact print of the desired texture;
c. Application of a transparent finish;
wherein
the coloured three-dimensional texture is made of photo-polymerizable paint and inks directly applied on the object to be painted itself.

2. The method according to claim 1, comprising between step a. and step b. a further step of applying, uniforming and sanding a stain.

3. The method according to claim 2, comprising, upstream step a., a step of applying a base coat of a light (white, cream) colour.

4. The method according to claim 1, comprising, upstream step a., a step of applying a base coat of a light (white, cream) colour.

5. The method according one of the claims 1-4, wherein the colour printing is performed through digital printing or contact printing through engraved rollers, and the inks can be water inks, solvent inks, or U.V. photo-polymerizable inks.

6. The method according to one of the claims 1-4, wherein the protection transparent top coat is obtained with water paint, solvent paint, photo-polymerizable paint, which can moreover contain substances capable of improving abrasion resistance.

7. The method according to claim 2 or 3, wherein stain is applied through roller or sprayed, and the stain is preferably dark.

8. The method according to claims 3 or 4, wherein the light colour base coat is applied through roller or sprayed, and can be a water paint or ink, a solvent paint or ink, or a photo-polymerizable paint or ink.

9. The method according to one of the preceding claims, wherein the object to be painted is not flat but is shaped.

10. A method for coating panels, edges and mouldings of natural or synthetic materials, e.g. wood, stone, ceramics, fibre-cement or plastics with a coloured tridimensional texture, comprising the following steps:
a. Application of a layer of photo-polymerizable transparent or pale paint on the panel to be coated;
b. Impression of a three-dimensional texture by means of a transparent or monochromatic paint by contact with a transparent tape bearing on one side the three-dimensional texture to be impressed;
c. Pre-polymerisation of the paint by UV irradiation through the transparent tape up to jellification before detaching the tape from the coated surface;
d. Colour printing of a vein on the jellified paint
e. Final curing of the applied layers by UV irradiation;
f. Application of a protective transparent finish.

## Patentansprüche

1. Eine Methode zur Beschichtung von Bauplatten, Kanten und Formteilen aus natürlichen und synthetischen Werkstoffen, wie beispielsweise Holz, Stein Keramik, Faserzement oder Kunststoffe, welche folgende Schritte umfasst:
a) Aufbringen einer dreidimensionalen Struktur durch einen lichtpolymerisierbaren Anstrich, wobei
die Schicht des lichtpolymerisierbaren Anstrichs eine helle Farbe aufweist beziehungsweise transparent ist;
die Schicht des lichtpolymerisierbaren Anstrichs uniformiert wird durch ein Band oder eine Netzmatrize, um die auf den Gegenstand übertragene Struktur aufzuprägen;
die Schicht des lichtpolymerisierbaren Anstrichs gehärtet oder geliert wird durch eine UV-Lampe, welche sich jeweils über dem genannten Band/Netz befindet, wobei die genannte UV-Strahlung das durchsichtige Band/das Netz durchdringt;
die Schicht des lichtpolymerisierbaren Anstrichs die gewünschte Struktur annimmt durch die Übertragung der Prägung auf das Prägeband/die Netzmatrize und die folgende Polymerisierung vor der Entfernung des Prägebands/der Netzmatrize;
die Prägevorrichtung nur eine Einweg-Netzmatrize oder ein durchgehendes Band sein kann;
b) Digital- oder Kontaktdrucker der gewünschten Struktur;
c) Auftragen eines transparenten Deckanstrichs;
wobei
die farbige dreidimensionale Struktur aus einem lichtpolymerisierbaren Anstrich und direkt auf den selbst anzustreichenden Gegenstand aufgetragenen Tinten besteht.

2. Eine Methode gemäß Anspruch 1, welche zwischen Schritt a und Schritt b jeweils den zusätzlichen Schritt des Auftragens, Uniformierens und Sandens eines Farbstoffs umfasst.

3. Eine Methode gemäß Anspruch 2, welche, jeweils vorgeschaltet vor Schritt a, einen Schritt umfasst, bei dem das Auftragen einer Grundierung mit heller (weiß, creme) Farbe vorgesehen ist.

4. Eine Methode gemäß Anspruch 1, welche, jeweils vorgeschaltet vor Schritt a, einen Schritt umfasst, bei dem das Auftragen einer Grundierung mit heller (weiß, creme) Farbe vorgesehen ist.

5. Eine Methode gemäß einem der Ansprüche von 1-4, wobei der Farbdruck durch Digitaldruck oder Kontaktdruck mit Hilfe entsprechend gravierter Walzen erfolgt, und die Tinten jeweils Wassertinten, Lösungsmitteltinten oder UV-lichtpolymerisierbare Tinten sein können.

6. Eine Methode gemäß einem der Ansprüche von 1-4, wobei die transparente Schutz-Deckschicht mit Wasserfarbe, Lösungsmittelanstrich, lichtpolymerisierbarem Anstrich erzielt wird, welcher desweiteren Substanzen enthalten kann, die die Abriebfestigkeit erhöhen können.

7. Eine Methode gemäß Anspruch 2 oder 3, wobei Farbstoff jeweils mit Hilfe einer Walze aufgetragen oder gesprüht wird und der Farbstoff vorzugsweise dunkel ist.

8. Eine Methode gemäß dem Anspruch 3 oder 4, wobei die helle Farbgrundierungsschicht jeweils mit Hilfe einer Walze aufgetragen oder gesprüht wird und jeweils aus Wasserfarbe oder Tinte, Lösemittelanstrich oder Tinte, lichtpolymerisierbarem Anstrich oder Tinte bestehen kann.

9. Eine Methode gemäß einem der vorausgegangenen Ansprüche, wobei der anzustreichende Gegenstand nicht flach sondern entsprechend geformt ist.

10. Eine Methode zur Beschichtung von Bauplatten, Kanten und Formteilen aus natürlichen und synthetischen Werkstoffen, wie beispielsweise Holz, Stein, Keramik, Faserzement oder Kunststoffe mit farbiger dreidimensionaler Struktur, welche folgende Schritte umfasst:
a) Das Auftragen einer Schicht aus hellem, transparentem, lichtpolymerisierbarem Anstrich auf die jeweils zu beschichtende Bauplatte;
b) Das Aufprägen einer dreidimensionalen Struktur mit Hilfe von transparentem oder einfarbigem Anstrich per Kontakt mit einem transparenten Band, das auf einer Seite mit der entsprechenden, aufzuprägenden dreidimensionalen Struktur versehen ist;
c) Vorpolymerisierung der Farbe durch UV-Bestrahlung durch das transparente Band bis zur Gelierung, bevor das Band von der beschichteten Oberfläche entfernt wird;
d) Farbaufdruck einer Maserung auf den gelierten Anstrich;
e) Abschließendes Aushärten der aufgetragenen Schichten durch UV-Bestrahlung;
f) Auftragen eines transparenten Schutz-Deckanstrichs.

## Revendications

1. Procédé de revêtement de panneaux, bords et moulures en matériaux naturels ou synthétiques, par exemple bois, pierre, céramiques, fibre-ciment ou plastiques, comprenant les étapes suivantes :
a. l'application d'une texture tridimensionnelle à travers une peinture photo-polymérisable ; dans laquelle
la couche de peinture photo-polymérisable est d'une couleur claire ou transparente ;
la couche de peinture photo-polymérisable est rendue uniforme par une matrice de bande ou toile pour imprimer la texture transférée sur l'objet ;
la couche de peinture photo-polymérisable est durcie ou gélifiée par une lampe UV placée au-dessus de ladite bande/toile, ledit rayonnement UV passant à travers la bande/toile libre ;
la couche de peinture photo-polymérisable acquiert la texture désirée par transfert du gaufrage sur la matrice de bande/toile d'imprimeur et la polymérisation suivante avant l'enlèvement de la matrice de bande/toile d'organe imprimeur ;
l'organe imprimeur peut être seulement une matrice de toile jetable ou une bande continue ;
b. l'impression numérique ou par contact de la texture désirée ;
c. l'application d'un enduit transparent ;
dans lequel
la texture tridimensionnelle colorée est constituée de peinture photo-polymérisable et d'encres appliquées directement sur l'objet à peindre lui-même.

2. Procédé selon la revendication 1, comprenant, entre l'étape a. et l'étape b., une autre étape d'application, d'uniformisation et de sablage d'une teinture.

3. Procédé selon la revendication 2, comprenant, en amont de l'étape a., une étape d'application d'une couche de base d'une couleur claire (blanche, crème).

4. Procédé selon la revendication 1, comprenant, en amont de l'étape a., une étape d'application d'une couche de base d'une couleur claire (blanche, crème).

5. Procédé selon une des revendications 1 à 4, dans lequel l'impression couleur est effectuée par impression numérique ou impression par contact par l'intermédiaire de rouleaux gravés, et les encres peuvent être des encre à l'eau, des encres à base de solvant ou des encres photo-polymérisables aux UV.

6. Procédé selon une des revendications 1 à 4, dans lequel la couche de finition transparente de protection est obtenue avec une peinture à l'eau, une peinture à base de solvant, une peinture photo-polymérisable, qui peut contenir par ailleurs des substances capables d'améliorer la résistance à l'abrasion.

7. Procédé selon la revendication 2 ou 3, dans lequel une teinture est appliquée au rouleau ou pulvérisée, et la teinture est de préférence sombre.

8. Procédé selon les revendications 3 ou 4, dans lequel la couche de base de couleur claire est appliquée au rouleau ou pulvérisée, et peut être une peinture ou encre à l'eau, une peinture ou encre à base de solvant ou une peinture ou encre photo-polymérisable.

9. Procédé selon une des revendications précédentes, dans lequel l'objet à peindre n'est pas plat mais est profilé.

10. Procédé de revêtement de panneaux, bords et moulures en matériaux naturels ou synthétiques, par exemple bois, pierre, céramique, fibre-ciment ou plastique avec une texture tridimensionnelle colorée, comprenant les étapes suivantes :
a. l'application d'une couche de peinture transparente ou pâle photo-polymérisable sur le panneau à revêtir ;
b. l'impression d'une texture tridimensionnelle au moyen d'une peinture transparente ou monochromatique par contact avec une bande transparente appuyant sur un côté de la texture tridimensionnelle à imprimer ;
c. la pré-polymérisation de la peinture par rayonnement UV à travers la bande transparente jusqu'à la gélification avant le détachement de la bande de la surface revêtue ;
d. l'impression couleur d'une veine sur la peinture gélifiée ;
e. le durcissement final des couches appliquées par rayonnement UV ;
f. l'application d'une finition transparente protectrice.
